# EUROPEAN PATENT APPLICATION

(11) **EP 4 768 334 A1**
(43) Date of publication of application: **01.07.2026**
(21) Application number: 25227418.8
(22) Date of filing: 29.12.2025
(51) Int. Cl.: B60N 2/75

(54) **AN ARMREST ASSEMBLY FOR A VEHICLE INTERIOR**

(30) Priority: 30.12.2024 IN 202421104371
(71) Applicant: Faurecia India Private Limited, Bhosari, Pune 411026 (IN)
(72) Inventor: SODMISE, Rahul, 411015 Pune, Maharashtra, (IN); SHINGI, Rohit, 411018 Pimpri, Maharashtra (IN)
(74) Representative: Pfenning, Meinig & Partner mbB

(57) **Abstract**

An armrest assembly (100) for a vehicle interior is disclosed. The armrest assembly (100) comprises an armrest (102) pivotally arranged on a housing (104) and movable between a closed position and an open position, at least one latch element (108) adapted to latch the armrest (102) to the housing (104) in the closed position, and a tray (106) slidably arranged on or within the armrest (102). The tray (106) adapted to move between a stowed position, in which the tray (106) is covered by the armrest (102), and a usage position, in which the tray (106) is extending out of the armrest (102). The tray (106) comprises one or more ribs (112) abutting with the at least one latch element (108) when the armrest (102) is in the closed position and the tray (106) is in the usage position, to retain the armrest (102) at the closed position.

## Description

### TECHNICAL FIELD

The present disclosure relates to automobiles. More particularly, the present disclosure relates to an armrest assembly for a vehicle interior having improved stability and functionality, while enhancing the overall experience for vehicle occupants.

### BACKGROUND

In contemporary vehicle interior design, comfort and multi-functionality are essential elements of the overall user experience. Armrests, which are a standard feature in most vehicles, serve an important role in enhancing passenger comfort, particularly during long journeys. They are typically located on the center console or armrest areas between the front seats or in rear seat configurations, providing a place for passengers to rest their arms and contributing to a more relaxed driving experience.

Over time, vehicle manufacturers have sought to incorporate additional features into armrests to improve their utility. One such feature is the inclusion of a slidable tray, which offers added storage or provides a useful surface for placing personal items, writing, eating, or working. These trays can often be stowed when not in use, conserving space and keeping the vehicle interior clean and organized. Slidable trays are becoming increasingly common in modern vehicle designs, particularly in center consoles or between seats, where additional surfaces and storage space are valuable.

However, while the slidable tray is a useful addition, the integration of a pivotable armrest with such a tray presents challenges. Conventional pivotable armrests typically operate between an open configuration, in which a storage space of the armrests is accessible to vehicle occupants, and a closed configuration, in which the armrest is available to accommodate resting posture of a vehicle occupant. However, when a slidable tray is deployed from beneath the armrest, the free pivoting movement of the armrest can interfere with the functionality and stability of the tray.

Specifically, when the tray is pulled out for use, the pivoting of the armrest may cause the armrest to shift or rotate unexpectedly, which could cause the tray to be pushed back into its stowed position, disrupt the tray's functionality, or even create discomfort or instability for the vehicle occupant. This lack of stability and coordination between the pivotable armrest and the slidable tray compromises the overall design and user experience.

There is, therefore, a need in the art for an integrated solution that addresses the shortcomings and deficiencies associated with the conventional vehicle armrests, by ensuring that when the sliding tray is deployed, the armrest is securely held in place, preventing it from pivoting and interfering with the functionality of the tray. Such a solution would not only improve the stability of the armrest and the sliding tray but also enhance user comfort and convenience. Furthermore, it would provide a seamless experience for users, ensuring that the armrest remains fixed in position when the tray is in use, without requiring manual adjustments or compromising the tray's utility.

Additionally, it is important to note that vehicle interiors are often designed with limited space and must accommodate a wide range of features and mechanisms. As a result, the integration of various components such as armrests, trays, and other storage elements must be efficient and compact while ensuring ease of use. There is a growing demand for multi-functional components that can be easily operated while maintaining durability and functionality over time. These considerations underscore the importance of a well-designed armrest assembly that is both user-friendly and space-efficient. The present invention addresses these challenges by providing an armrest assembly that incorporates both a pivotable armrest and a slidable tray, with a novel mechanism that prevents the pivoting of the armrest when the tray is deployed. This mechanism ensures that the tray remains in its intended position and fully functional, while the armrest remains securely fixed, thereby preventing unintended movement. By providing a solution to this long-felt need, the present invention offers a more stable, reliable, and convenient solution for vehicle interior design, particularly in vehicles where the integration of multiple comfort and utility features is desired.

### OBJECTS OF THE PRESENT DISCLOSURE

An object of the present disclosure is to provide an armrest assembly for vehicle interiors that integrates both a pivotable armrest and a slidable tray, enhancing the comfort and functionality of the vehicle.

Another object of the present disclosure is to provide an armrest assembly configured to ensure that when a slidable tray is deployed, an armrest thereof is securely fixed in place, preventing unintended movement or pivoting of the armrest that could disrupt the functionality of the slidable tray.

Another object of the present disclosure is to provide an armrest assembly for a vehicle that offers a smooth, reliable, and stable experience for vehicle occupants by ensuring that the pivotable armrest remains in a fixed position when the slidable tray is in use, thereby avoiding discomfort or instability caused by unintended movement of the armrest.

Another object of the present disclosure is to provide an armrest assembly that enhances the overall ergonomic design of the vehicle interior, contributing to greater passenger satisfaction, especially during long trips.

Another object of the present disclosure is to provide an armrest assembly that integrates a pivotable armrest and a slidable tray without requiring excessive space within the vehicle interior, making it ideal for modem vehicles with limited space while still maximizing utility and comfort.

Another object of the present disclosure is to provide an armrest assembly configured to efficiently prevent unwanted movement of the pivotable armrest when the slidable tray is deployed, improving the durability of both components, reducing wear and tear, and ensuring smooth operation over time.

Another object of the present disclosure is to provide an armrest assembly that incorporates a simple, user-friendly mechanism for preventing the pivot movement of the armrest when the slidable tray is in use, requiring minimal user effort and ensuring smooth and intuitive operation of the mechanism.

Another object of the present disclosure is to provide an armrest assembly that improves the safety of vehicle interior components by preventing unintended movement of the pivotable armrest during the use of the slidable tray, which could otherwise distract the driver of the vehicle or cause discomfort to the occupants.

### SUMMARY

Aspects of the present disclosure relate to an armrest assembly for vehicle interiors that integrates a pivotable armrest and a slidable tray, providing a dual-purpose solution that enhances both comfort and functionality. The armrest assembly is configured to ensure that when the tray is deployed, the armrest is securely fixed in place, preventing unwanted movement that could interfere with the tray's use, thereby providing a stable, reliable, and user-friendly experience. The armrest assembly improves ergonomics, promotes greater comfort for vehicle passengers, especially on long trips, and increases overall passenger satisfaction. The armrest assembly is space-efficient, making it ideal for vehicles with limited interior space while still maximizing comfort and utility. Additionally, the armrest assembly reduces wear and tear by preventing unintended movement of the armrest when the slidable tray is in use, improving durability and ensuring smooth, long-lasting operation. By preventing unintended movement of the pivotable armrest, the armrest assembly also enhances safety, reducing the risk of driver distraction and improving overall occupant stability and comfort.

In one aspect, the present disclosure provides an armrest assembly for a vehicle interior. The armrest assembly includes an armrest adapted to be pivotally arranged on a housing. The armrest is adapted to move between a closed position and an open position. The armrest assembly includes at least one latch element adapted to latch the armrest to the housing in the closed position, and a tray slidably arranged on or within the armrest. The tray is adapted to move between a stowed position, in which the tray is covered by the armrest, and a usage position, in which the tray is extending out of the armrest. The tray includes one or more ribs abutting with the at least one latch element when the armrest is in the closed position and the tray is in the usage position, which correspondingly locks movement of the at least one latch element, to retain the armrest at the closed position.

In an embodiment, the at least one latch element may be pivotally coupled to a casing of the armrest. The at least one latch element may be adapted to pivotally move between a latched position, in which the armrest is latched to the housing, and an unlatched position, in which the armrest is unlatched from the housing only when the tray is in the stowed position. The tray may be slidably arranged on a pair of rails provided on the casing.

In an embodiment, the at least one latch element may be a spring-loaded hook-shaped element biasing towards the housing.

In an embodiment, the at least one latch element may include a protrusion that is adapted to abut with the one or more ribs only when the tray is in the usage position.

In an embodiment, the one or more ribs may be positioned on lateral sides and towards/at a rear end of the tray. In an embodiment, a front end of the tray may remain accessible to be gripped by a user to manually slide out the tray from the stowed position to the usage position.

In an embodiment, the at least one latch element may be provided on each lateral side and towards a frontal end of the casing, and may be adapted to latch onto a frontal end of the housing. The armrest may be pivotally connected towards or at a rear end of the housing.

In an embodiment, the armrest may be adapted to be unlatched from the housing only when the tray is in the stowed position.

In an embodiment, the housing may include a storage space configuring a storage assembly for accommodating one or more articles. The storage assembly may be a central console of the vehicle interior, which may be arranged beside a vehicle seat or between two adjacent vehicle seats.

In an embodiment, the tray may be slidable in an intermediate usage position between the stowed position and the usage position. In the intermediate usage position, the one or more ribs of the tray lock the movement of the at least one latch element. In another embodiment, the tray may be slidable in an intermediate usage position between the stowed position and the usage position. In the intermediate usage position, the one or more latch elements is movable from the latching to unlatching position. More particularly, the usage position is a position where the tray is pulled/extended out of the armrest to a maximum usage state without complete disengagement of the tray from the armrest and the intermediate usage position is a position where the tray is pulled/extended out of the armrest to a partial usage state in which still a tray use portion of the tray is hidden/covered under the armrest.

In an embodiment, the at least one latch element may include a pair of spring-loaded hook-shaped element biasing towards an opposite wall of the housing.

Another aspect of the present disclosure pertains to a storage assembly for vehicle interior. The storage assembly includes a housing with a storage space for storing articles therein/thereon, and a lid pivotally arranged on the housing. The lid is adapted to move between a closed position and an open position to cover and uncover the storage space, respectively. The storage assembly also includes one or more latch elements adapted to latch the lid to the housing in the closed position, and a tray slidably arranged within the lid. The tray is adapted to move between a stowed position, in which the tray is covered by the armrest, and a usage position, in which the tray extends out of the lid. The tray includes one or more ribs abutting with the one or more latch elements when the lid is in the closed position and the tray is in the usage position, which correspondingly locks movement of the one or more latch elements, thereby retaining the lid at the closed position.

In an embodiment, the one or more latch elements may be pivotally coupled to a casing of the lid, and adapted to pivotally move between a latched position, in which the lid is latched to the housing, and an unlatched position, in which the lid is unlatched from the housing only when the tray is in the stowed position.

In an embodiment, the one or more latch elements may be a spring-loaded hook-shaped biasing towards the housing of the storage assembly.

In an embodiment, each of the one or more latch elements may include a protrusion or a fin that is adapted to abut with the one or more ribs only when the tray is in the usage position.

In an embodiment, the one or more ribs may be provided on lateral sides and towards/at a rear end of the tray. In an embodiment, a front end of the tray may extend at least partially out of a front end of the housing, to remain accessible to be gripped by a user for its movement between the stowed position and the usage position.

In an embodiment, the one or more latch elements may be provided on each lateral side at a front end of the casing adapted to latch onto a front end of the housing.

In an embodiment, the lid may be pivotally connected to a pivot point at a rear end of the housing.

In an embodiment, the lid may be adapted to be pivotally moved between the closed position and the open position, only when the tray is in the stowed position.

In an embodiment, the storage assembly may be a central console arranged beside a vehicle seat.

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIGs. 1A to 1D illustrate various exemplary representations of an armrest assembly for a vehicle, in accordance with an embodiment of the present disclosure;
FIG. 2 illustrates an exemplary perspective view of at least one latch element of the armrest assembly, in accordance with an embodiment of the present disclosure;
FIG. 3A illustrates an exemplary representation of a tray having a storage space, in accordance with an embodiment of the present disclosure;
FIG. 3B illustrates an exemplary representation of the tray with one or more ribs abutting with a protrusion of the at least latch element of the armrest assembly, in accordance with an embodiment of the present disclosure;
FIG. 3C illustrates an exemplary representation of the tray equipped with a long extended rib, in accordance with another embodiment of the present disclosure; and
FIG. 4 illustrates an exemplary isometric view of the armrest assembly depicting the at least one latch element latched with a wall of a housing of the armrest assembly when the tray is in a usage position, in accordance with an embodiment of the present disclosure.

### DETAILED DESCRIPTION

The following is a detailed description of embodiments of the disclosure depicted in the accompanying drawings. The embodiments are in such details as to clearly communicate the disclosure. However, the amount of detail offered is not intended to limit the anticipated variations of embodiments; on the contrary, the intention is to cover all modifications, equivalents, and alternatives falling within the scope of the present disclosures as defined by the appended claims.

Embodiments described herein relate to an armrest assembly designed for vehicle interiors, which combines a pivotable armrest with a slidable tray, offering a dual-purpose solution that improves both comfort and functionality. The armrest assembly is designed to securely hold the armrest in place when the tray is extended/deployed, preventing any unintended movement that could disrupt the tray's operation, thus ensuring a stable and reliable user experience. The armrest assembly also enhances ergonomics and provides greater comfort for vehicle occupants. The design of the armrest assembly is space-efficient, making it well-suited for vehicles with limited interior space, all while maximizing both comfort and practicality. Furthermore, the armrest assembly minimizes wear and tear by restricting the armrest's movement when the tray is in use, which enhances durability and ensures smooth, long-term performance.

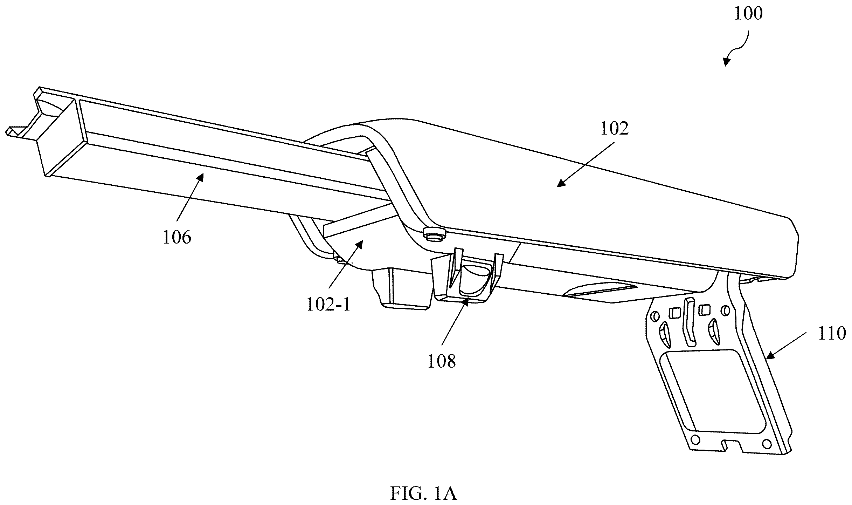

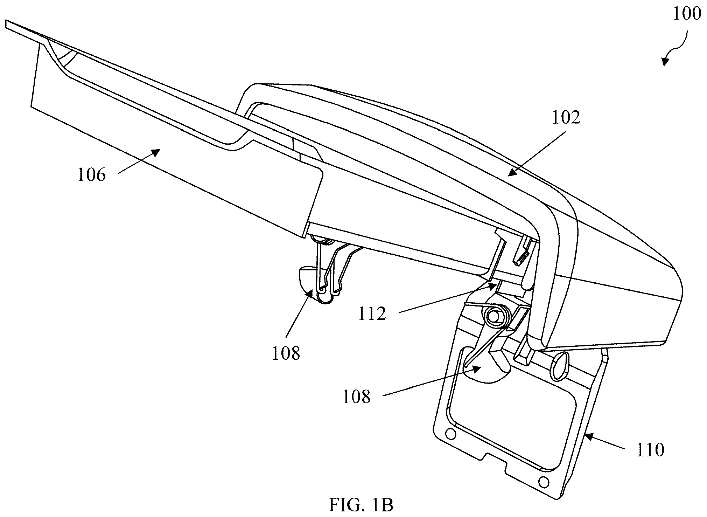

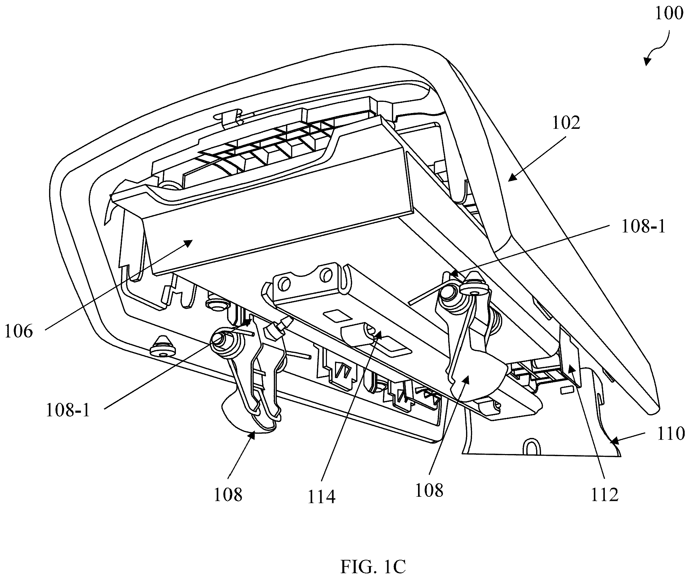

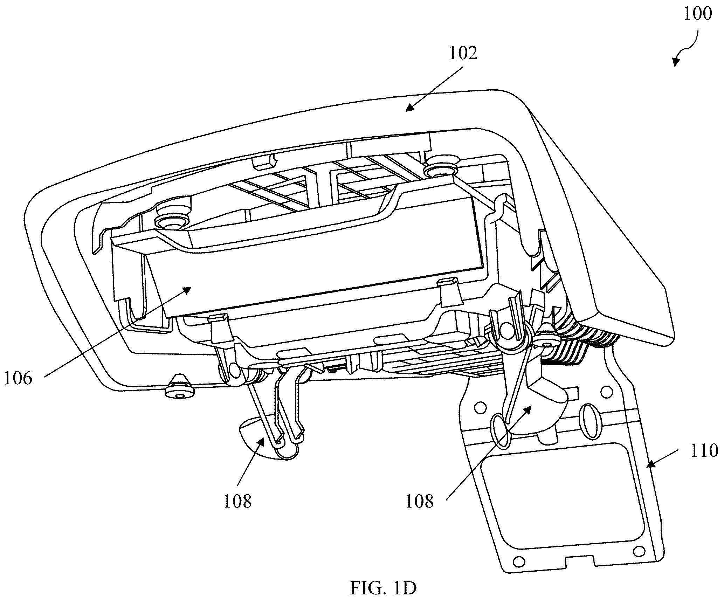

FIGs. 1A and 1B illustrate exemplary side perspective views of an armrest assembly 100 for a vehicle. FIGs. 1C and 1D illustrate exemplary rear perspective views of the armrest assembly 100. The armrest assembly 100 is designed to be installed within the interior of the vehicle at a location convenient for one or more vehicle occupants to rest their arms or store various items, such as keys, electronic devices, beverage containers, and other personal articles. The armrest assembly 100 may be installed at a central console beside a vehicle seat, or between two adjacent seats within the vehicle interior. The armrest assembly 100 includes an armrest (also referred to as a "lid" herein) 102, which is adapted to be pivotally attached to a housing 104. In an exemplary embodiment, the armrest 102 is connected to the housing 104 via a bracket 110 such that one end of the bracket 110 is pivotally connected to the armrest 102 and another (opposite) end of the bracket 110 is fixed to the housing 104. The armrest 102 can move between a closed position and an open position. In the closed position, the armrest 102 rests on top of the housing 104, such that it is substantially flush with the top of the housing 104. In the closed position, the armrest 102 provides a surface for a vehicle occupant, such as the driver, to rest their arms, enhancing comfort during travel. The armrest 102 can be hingedly moved from the closed position to an open position relative to the housing 104, at which point the armrest 102 is inclined with respect to the housing 104, providing access to a storage space within the housing 104. This storage space allows the vehicle occupants to store various items. The armrest 102 is coupled to the housing 104 by a hinge, enabling pivot movement between the open and closed positions.

In an exemplary embodiment, the armrest assembly 100 may include a first actuator designed to enable movement of the lid 102 between the open and closed positions, upon actuation thereof. This first actuator may be operatively connected to an interface unit installed within the vehicle cabin, allowing the vehicle occupants to provide an input that controls the actuation of the first actuator, thus moving the armrest assembly 100 between the open and closed positions. The first actuator may include at least one of an electric motor, an electric actuator, a pneumatic actuator, a hydraulic actuator, and the like. The interface unit any include any combination of input devices, such as buttons, touchpads, or touch-integrated display screens, providing the vehicle occupants with an easy and intuitive way to control the movement of the lid 102 between the open and closed positions.

The armrest assembly 100 also includes a tray 106 that is slidably arranged on or beneath the armrest 102. The tray 106 is designed to move between a stowed position, in which it is concealed/covered under the armrest 102, and a usage position, where the tray 106 extends outward from the armrest 102. In the stowed position, the tray 106 is hidden within a casing 102-1 of the armrest 102. Further, the armrest 102 is connected to the housing 104 via the bracket 110 such that one end of the bracket 110 is pivotally connected to the armrest 102 and another (opposite) end of the bracket 110 is fixed to the housing 104. When the armrest 102 is moved to the open position while the tray 106 remains in the stowed position, the storage space in the tray may become accessible, allowing vehicle occupants to store various items. Additionally, the tray 106 is designed to slide from the stowed position to the usage/deployed position, in which the tray 106 is positioned outside the casing 102-1 of the armrest 102 for easy access by vehicle occupants. The tray 106 may be moved from the stowed to the usage position even when the armrest 102 remains in its closed position.

In an exemplary embodiment, the housing 104 may contain a storage space configured as a storage assembly to accommodate various items, such as keys, electronic devices, beverage containers, and other personal articles. This storage assembly may be part of a central console located beside a vehicle seat or positioned between two adjacent seats within the vehicle interior. This arrangement ensures that the storage space is easily accessible to vehicle occupants while optimizing the use of available space within the vehicle.

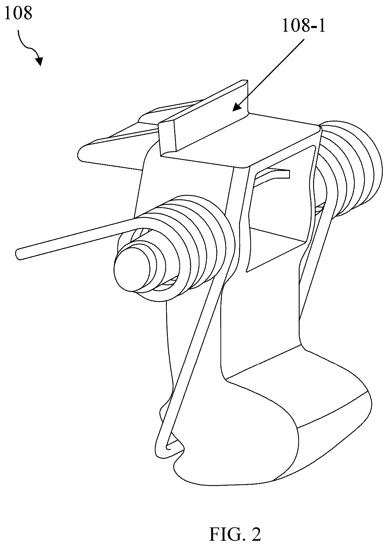

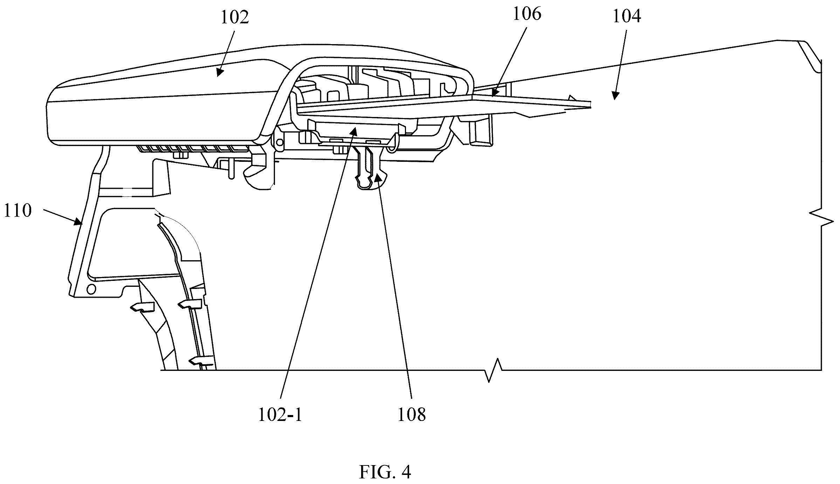

Referring now to FIG. 2, the armrest assembly 100 includes at least one latch element 108 designed to secure/latch the armrest 102 to the housing 104 in the closed position. The at least one latch element 108 may be pivotally coupled to the casing 102-1 of the armrest 102, as clearly illustrated in FIG. 4. The latch element 108 is adapted to pivot between a latched position, in which the armrest 102 is securely latched to the housing 104, and an unlatched position, in which the armrest 102 is unlatched from the housing 104. The armrest 102 can only be unlatched when the tray 106 is in the stowed position. The latch element 108 may include a protrusion 108-1 that engages with one or more ribs 112 of the tray 106, as shown in FIG. 1B, only when the tray 106 is in the usage position, and the armrest 102 is in the closed position.

In an exemplary embodiment, the at least one latch element 108 is a spring-loaded hook-shaped component that biases toward a wall of the housing 104. In another embodiment, the at least one latch element 108 is formed of a pair of spring-loaded hook-shaped elements, each biasing toward opposite walls of the housing 104.

In an exemplary embodiment, the lid 102 is designed to be unlatched from the housing 104 only when the armrest 102 is in the close position and the tray 106 is in the stowed position. The at least one latch element 108 may be located on a lateral side and towards/at the front end of the casing 102-1 of the lid 102. The at least one latch element 108 may be adapted to latch onto a corresponding frontal end of the housing 104 to secure the lid 102 in place. The lid 102 is pivotally connected to the housing 104 at or near/towards the rear end of the housing 104.

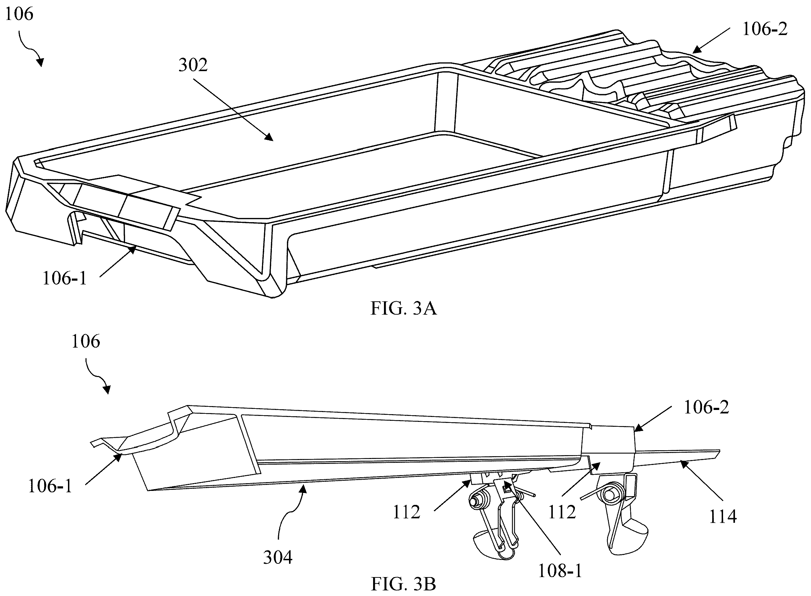

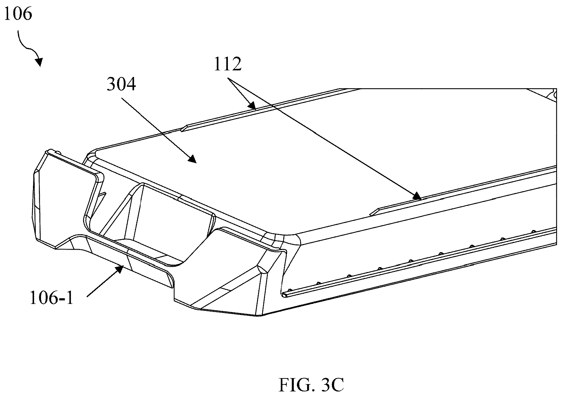

FIGs. 3A and 3B show an exemplary perspective view and an exemplary side view of the tray 106, respectively. FIG. 3C illustrates another exemplary perspective view of the bottom portion 304 of the tray 106 with one or more ribs 112 extending on more than half a length of the tray 106. The tray 106 is slidably arranged on a pair of rails 114 provided on the casing 102-1 of the armrest 102, as clearly shown in FIGs. 1C and 3B. The tray 106 includes a storage space 302, which is easily accessible to vehicle occupants for storing various articles when the tray is in the usage position. The storage space 302 is concealed within the casing 102-1 of the armrest 102 when the tray 106 is in the stowed position. The tray 106 also includes one or more ribs 112, as shown in FIGs. 3B and 3C, each of which is adapted to make contact with the protrusion 108-1 of the corresponding latch element 108 when the armrest 102 is in the closed position and the tray 106 is in the usage position. Thus, the ribs 112 abut the protrusion 108-1 when the armrest 102 is in the closed position and the tray 106 is in the usage position, which locks the latch element 108, thereby retaining the armrest 102 in the closed position.

In an exemplary embodiment, the front end 106-1 of the tray 106 remains accessible to be gripped by a vehicle occupant, enabling them to manually slide the tray 106 from the stowed position to the usage position. The one or more ribs 112 may be positioned on the lateral sides at the bottom of the tray 106 and towards the rear end 106-2 of the tray 106. The one or more ribs 112108-1108-1 abut with the protrusion 108-1 of the at least one latch element 108 only when the tray 106 is in the usage position.

The tray 106 may also be slidable into a 108-1usage position between the stowed and usage positions. In an embodiment as shown in FIG. 3B, the one or more ribs 112 are placed/arranged only at the rear end 106-2 of the tray 106, to enable abutment with the protrusion 108-1 of the at least one latch element 108 only when the tray 106 is slided out of the casing 102-1 to a maximum usage state. In another embodiment as shown in FIG. 3C, the one or more ribs 112 are placed/arranged to start at a predetermined distance from the front end 106-1 of the tray 106, extending towards the rear end 106-2, to enable abutment with the protrusion 108-1 of the latch element 108 when the tray 106 is just slided out of the casing 102-1 even with partial usage state.

In an exemplary embodiment, the armrest assembly 100 may include an actuator designed to facilitate the movement of the tray 106 between the stowed position, the intermediate usage position, and the usage position based on actuation. The actuator may be operatively connected to the interface unit within the vehicle cabin, allowing vehicle occupants to provide an input for moving the tray between these positions. The actuator may include any of an electric motor, an electric actuator, a pneumatic actuator, a hydraulic actuator, and the like, to enable movement of the tray 106 between the stowed position, the intermediate usage position, and the usage position.

FIG. 4 illustrates an exemplary isometric view of the armrest assembly 100 depicting the at least one latch element 108 latched with a wall of a housing 104 of the armrest assembly 100 when the tray 106 is in the usage position. When the tray 106 is in its stowed position, the ribs 112 located on the lateral sides of the tray's bottom portion 304 do not make contact with the protrusion 108-1 of the corresponding latch element 108. In this unlatched position, the at least one latch element 108 remains disengaged from the housing 104, as shown in FIG. 4. As a result, the armrest 102 is free to move between the closed and open positions when manually actuated by a vehicle occupant.

108-1Thus, the armrest assembly 100 ensures that, when the tray 106 is deployed, the armrest 102 is firmly locked in place, eliminating the risk of unwanted movement that could interfere with the tray's functionality. Furthermore, the armrest assembly 100 reduces wear and tear by preventing accidental movement of the armrest 102 when the tray 106 is in use, improving its durability and ensuring long-lasting, smooth operation. Additionally, by minimizing unintended armrest movement, the armrest assembly 100 enhances safety by reducing the likelihood of distraction of a driver of the vehicle, while improving occupant stability and comfort.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE PRESENT DISCLOSURE

The present disclosure provides an armrest assembly for a vehicle interior that integrates both a pivotable armrest and a slidable tray, offering a dual-purpose solution that significantly enhances the comfort and functionality of the vehicle interior.

The present disclosure provides an armrest assembly configured to ensure that when the slidable tray is in the deployed or usage position, the pivotable armrest is securely fixed in place, preventing any unintended pivoting or movement that could disrupt the tray's functionality, thereby offering a more stable and user-friendly experience.

The present disclosure provides an armrest assembly that ensures a smooth, reliable, and stable experience for vehicle occupants by maintaining the pivotable armrest in a fixed position when the slidable tray is in use, thereby reducing discomfort and preventing instability caused by unintended movement of the armrest.

The present disclosure provides an armrest assembly that improves the overall ergonomic design of the vehicle interior, promoting greater passenger comfort, particularly during long trips, and thereby enhancing the overall satisfaction of the occupants.

The present disclosure provides an armrest assembly that integrates a pivotable armrest and a slidable tray without requiring excessive space within the vehicle interior, making the armrest assembly ideal for modem vehicles with limited interior space, while still maximizing comfort and utility.

The present disclosure provides an armrest assembly that efficiently prevents unwanted movement of the pivotable armrest when the slidable tray is deployed, thereby reducing wear and tear on both components, enhancing overall durability, and ensuring smooth, long-lasting operation.

The present disclosure provides an armrest assembly for a vehicle interior configured to prevent unintended movement of the pivotable armrest during the use of the slidable tray, while also enhancing the safety of components within the vehicle interior. This reduces the risk of distraction for the vehicle driver and improves the comfort and stability of the vehicle occupants.

### LIST OF REFERENCE NUMERALS

100 - Armrest assembly.
102 - Armrest.
102-1 - Casing.
104 - Housing.
104-1 - Slot.
106 - Tray.
106-1 - Front end.
106-1 - Rear end.
108 - Latch element.
108-1 - Protrusion.
110 - Bracket.
112 - Rib.
114 - Rail.
302 - Storage space.
304 - Bottom portion of the tray.

## Claims

1. An armrest assembly (100) for a vehicle interior, the armrest assembly (100) comprising:
an armrest (102) adapted to be pivotally arranged on a housing (104), the armrest (102) adapted to move between a closed position and an open position;
at least one latch element (108) adapted to latch the armrest (102) to the housing (104) in the closed position; and
a tray (106) slidably arranged on or within the armrest (102), the tray (106) adapted to move between a stowed position, in which the tray (106) is covered by the armrest (102), and a usage position, in which the tray (106) is extending out of the armrest (102);
wherein the tray (106) comprises one or more ribs (112) abutting with the at least one latch element (108) when the armrest (102) is in the closed position and the tray (106) is in the usage position, which correspondingly locks movement of the at least one latch element (108), thereby retaining the armrest (102) at the closed position.

2. The armrest assembly (100) as claimed in claim 1, wherein the at least one latch element (108) is pivotally coupled to a casing (102-1) of the armrest (102) and adapted to pivotally move between a latched position, in which the armrest (102) is latched to the housing (104), and an unlatched position, in which the armrest (102) is unlatched from the housing (104).

3. The armrest assembly (100) as claimed in claim 1 or 2, wherein the at least one latch element (108) is a spring-loaded hook-shaped element biasing towards the housing (104).

4. The armrest assembly (100) as claimed in claim 1, wherein the at least one latch element (108) comprises a protrusion (108-1) that is adapted to abut with the one or more ribs (112) only when the tray (106) is in the usage position.

5. The armrest assembly (100) as claimed in claim 1, wherein the one or more ribs (112) are positioned on lateral sides and towards/at a rear end of the tray (106), and wherein a front end of the tray (106) remains accessible to be gripped by an user to manually slide out the tray (106) from the stowed position to the usage position.

6. The armrest assembly (100) as claimed in claim 2, wherein the at least one latch element (108) is provided on each lateral side and towards a frontal end of the casing (102-1), and adapted to latch onto a frontal end of the housing (104), and wherein the armrest (102) is pivotally connected towards or at a rear end of the housing (104).

7. The armrest assembly (100) as claimed in claim 1, wherein the armrest (102) is adapted to be unlatched from the housing (104) only when the tray (106) is in the stowed position.

8. The armrest assembly (100) as claimed in claim 1, wherein the housing (104) includes a storage space configuring a storage assembly (100) for accommodating one or more articles, and wherein the storage assembly (100) is a central console arranged beside a vehicle seat or between two adjacent vehicle seats.

9. The armrest assembly (100) as claimed in claim 1, wherein the tray (106) is slidable in an intermediate usage position between the stowed position and the usage position, and wherein, in the intermediate usage position, the one or more ribs (112) of the tray (106) lock the movement of the at least one latch element (108).

10. The armrest assembly (100) as claimed in claim 1 or 2, wherein the at least one latch element (108) comprises a pair of spring-loaded hook-shaped element biasing towards an opposite wall of the housing (104).
